# EUROPÄISCHE PATENTSCHRIFT

(11) **EP 1 472 111 B1**
(45) Veröffentlichungstag und Bekanntmachung des Hinweises auf die Patenterteilung: **30.01.2008**
(21) Anmeldenummer: 02776715.1
(22) Anmeldetag: 24.09.2002
(51) Int. Cl.: B60W 10/02

(54) **VERFAHREN ZUR STEUERUNG DES BETRIEBSVERHALTENS EINES HYBRIDANTRIEBES EINES FAHRZEUGES**
METHOD FOR CONTROLLING THE OPERATING PERFORMANCE OF A HYBRID DRIVE OF A VEHICLE
PROCEDE DE COMMANDE DES CARACTERISTIQUES DE FONCTIONNEMENT D'UN SYSTEME D'ENTRAINEMENT HYBRIDE D'UN VEHICULE

(30) Priorität: 24.11.2001 DE 10157669
(43) Veröffentlichungstag der Anmeldung: 03.11.2004
(73) Patentinhaber: ROBERT BOSCH GMBH, 70442 Stuttgart (DE)
(72) Erfinder: HOETZER, Dieter, 71701 Schwieberdingen (DE); LOEFFLER, Juergen, 71638 Ludwigsburg (DE)
(74) Vertreter: Gleiss & Grosse
(86) Internationale Anmeldenummer: PCT/DE2002/003602
(87) Internationale Veröffentlichungsnummer: WO 2003/045725

(56) Entgegenhaltungen:
- EP-A- 0 729 858
- DE-A- 19 802 480
- US-A- 5 461 289

## Beschreibung

Die Erfindung betrifft ein Verfahren zur Steuerung des Betriebsverhaltens eines Hybridantriebes eines Fahrzeuges, wobei der Hybridantrieb als Antriebsmaschinen eine Verbrennungskraftmaschine und wenigstens eine elektrische Maschine umfasst und die Abtriebswellen der Antriebsmaschinen mit einem Antriebsstrang des Fahrzeuges wirkverbindbar sind.

### Stand der Technik

Hybridantriebe für Fahrzeuge sind bekannt. Bei den hier angesprochenen Hybridantrieben wird eine Verbrennungskraftmaschine mit wenigstens einer elektrischen Maschine kombiniert, so dass mehrere Antriebsquellen für das Fahrzeug zur Verfügung stehen. Entsprechend vorgegebener Anforderungen durch einen Fahrzeugführer, können hierbei die Antriebsquellen wahlweise ihre Antriebsmomente in einen Antriebsstrang des Fahrzeuges einspeisen. Hierdurch ergeben sich in an sich bekannter Weise in Abhängigkeit konkreter Fahrsituationen unterschiedliche Antriebsgestaltungsmöglichkeiten, die insbesondere der Verbesserung eines Fahrkomforts und der Reduzierung eines Energieeinsatzes sowie der Reduzierung einer Schadstoffemission dienen.

Bei Hybridantrieben für Fahrzeuge sind serielle Anordnungen, parallele Anordnungen und gemischte Anordnungen von Verbrennungskraftmaschine und elektrischen Maschinen bekannt. Je nach Anordnung sind die elektrischen Maschinen direkt oder indirekt in den Antriebsstrang der Verbrennungskraftmaschine schaltbar. Zur Wirkverbindung der Verbrennungskraftmaschine und/oder der elektrischen Maschinen ist bekannt, diese über Getriebe, beispielsweise Planetengetriebe oder dergleichen, und Kupplungen miteinander wirkverbindbar anzuordnen.

Die DE 19802480 A1 offenbart ein Verfahren zur Steuerung des Betriebsverhaltens eines Hybrid-Fahrzeuges nach dem Oberbegriff des Anspruchs 1.

Bekanntermaßen fungiert die Verbrennungskraftmaschine als Hauptantriebsquelle des Fahrzeuges, während die elektrischen Maschinen in Abhängigkeit konkreter Fahrsituationen zu- beziehungsweise abgeschaltet werden können. Bei den Antriebskonzepten ist bekannt, dass bei einer negativen Moment-Anforderung durch einen Fahrzeugführer die Verbrennungskraftmaschine ein Schleppmoment liefert, das durch die inneren Verluste der Verbrennungskraftmaschine in Abhängigkeit einer momentanen Motordrehzahl festgelegt ist. Findet während der negativen Moment-Anforderungen durch den Fahrzeugführer ein Gangwechsel statt, beispielsweise durch Betätigen eines Handschaltgetriebes oder Auslösen eines hydrodynamischen Wandlers (Automatikgetriebe), ergeben sich aufgrund der sprunghaften Änderung der auf den Antriebsstrang wirkenden Drehzahl (entsprechend der gewählten Gangstellung) sprunghafte Verläufe der Abtriebsmomente des Antriebes. Dies ist dadurch bedingt, dass das Schleppmoment der Verbrennungskraftmaschine abhängig von der Drehzahl ist.

### Vorteile der Erfindung

Das erfindungsgemäße Verfahren mit den in Anspruch 1 genannten Merkmalen bietet demgegenüber den Vorteil, dass bei einer negativen Moment-Anforderung (Schleppmoment-Anforderung) eines Fahrzeugführers eine Unabhängigkeit des Schleppmomentes von der Motordrehzahl der Verbrennungskraftmaschine erreicht wird. Dadurch, dass durch eine gezielte Ansteuerung der wenigstens einen elektrischen Maschine des Hybridantriebes eine Schleppmoment-Kennlinie des Hybridantriebes eingestellt wird, wird vorteilhaft möglich, eine fahrzeuggeschwindigkeitsabhängige Schleppmoment-Kennlinie des Hybridantriebes gezielt zu beeinflussen. Durch Ansteuerung der wenigstens einen elektrischen Maschine lässt sich das Schleppmoment der Verbrennungskraftmaschine teilweise oder ganz kompensieren beziehungsweise es kann durch einen generatorischen Betrieb der elektrischen Maschine ein zusätzliches Schleppmoment erzeugt werden.

Insbesondere können auch durch Trennen der Verbrennungskraftmaschine aus dem Antriebsstrang, beispielsweise durch Kupplungsbetätigung, Schleppmomente alleine durch die wenigstens eine elektrische Maschine aufgebracht werden, so dass sich für einen Fahrzeugführer ein an sich gewohntes Schleppmoment-Verhalten des Fahrzeuges einstellt. Durch die sich ergebenden Ansteuervariationen der elektrischen Maschine wird in jedem Fall erreicht, dass ein drehzahländerungsbedingtes sprunghaftes Verhalten der Schleppmoment-Kennlinie der Verbrennungskraftmaschine und somit des Hybridantriebes kompensiert werden kann.

In bevorzugter Ausgestaltung der Erfindung ist vorgesehen, dass ein so genannter Segelbetrieb des Hybridantriebes auch ohne Entkuppeln der Verbrennungskraftmaschine aus dem Antriebsstrang erfolgt. Das durch die Verbrennungskraftmaschine aufgebrachte Schleppmoment wird durch eine Ansteuerung der wenigstens einen elektrischen Maschine derart kompensiert, dass exakt das Schleppmoment der Verbrennungskraftmaschine durch ein positives Moment der wenigstens einen elektrischen Maschine kompensiert wird. Eine Verzögerung des Fahrzeuges wird dann allein durch den auf das Fahrzeug wirkenden Fahrwiderstand des Fahrzeuges bewirkt.

Ferner ist in bevorzugter Ausgestaltung der Erfindung möglich, durch gezielte Ansteuerung der wenigstens einen elektrischen Maschine die Schleppmoment-Kennlinie in Abhängigkeit einer Bremsanforderung eines Fahrzeugführers zu variieren. Hierdurch wird eine Bremsunterstützung durch Erhöhung eines Schleppmomentes des Hybridantriebes in einfacher Weise möglich.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine Moment-Kennlinie einer Verbrennungskraftmaschine;
- Figur 2: den Verlauf eines Abtriebsmomentes eines Fahrzeuges;
- Figur 3: schematisch einen Hybridantrieb eines Fahrzeuges;
- Figur 4: ein Blockschaltbild einer Schleppmoment-Beeinflussung des Hybridantriebes;
- Figur 5: Schleppmoment-Kennlinienverläufe von Antriebsquellen des Hybridantriebes;
- Figur 6: verschiedene Schleppmoment-Kennlinienverläufe des Hybridantriebes und
- Figur 7: ein Blockschaltbild über die Koordinierung einer Schleppmoment-Beeinflussung in Abhängigkeit einer Bremsanforderung des Fahrzeuges.

### Beschreibung der Ausführungsbeispiele

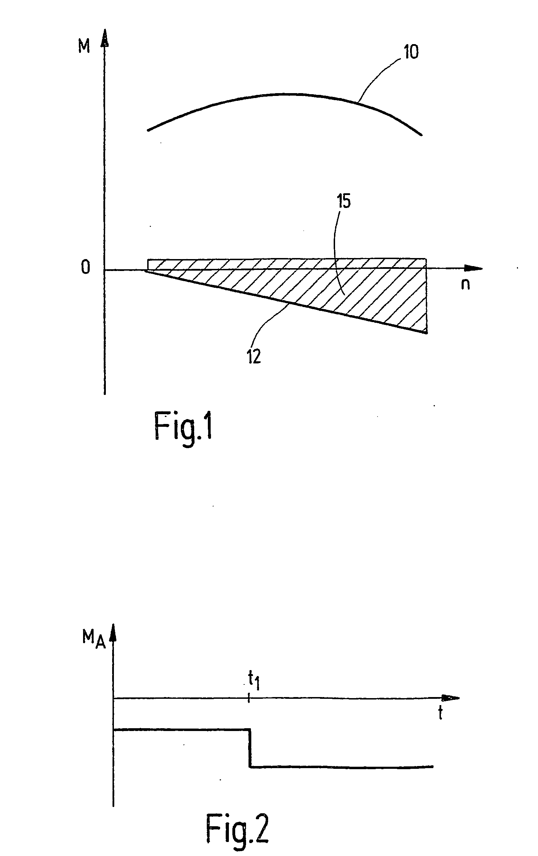

Figur 1 zeigt zur Verdeutlichung eine Moment-Kennlinie einer Verbrennungskraftmaschine über der Drehzahl. Einerseits ist eine maximale Moment-Kennlinie 10 bei einer Leistungsanforderung eines Fahrzeugführers dargestellt und andererseits ist eine Schleppmoment-Kennlinie 12 bei einer negativen Leistungsanforderung des Fahrzeugführers dargestellt. Eine negative Leistungsanforderung liegt vor, wenn der Fahrzeugführer ein Fahrpedal des Fahrzeuges nicht betätigt, das heißt eine Fahrpedalstellung die Stellung 0 oder annähernd die Stellung 0 einnimmt. Anhand der Kennlinie 12 in Figur 1 wird deutlich, dass bei diesem Betriebszustand des Fahrzeuges sich die Schleppmoment-Kennlinie 12 in Abhängigkeit der Motordrehzahl n einstellt. Je höher die Motordrehzahl n, desto höher ist das Schleppmoment. Das Schleppmoment ist negativ zum Antriebsmoment der Verbrennungskraftmaschine und insbesondere abhängig durch innere Verluste der Verbrennungskraftmaschine, insbesondere Reibung und dergleichen. Oberhalb der Schleppmoment-Kennlinie 12 ist ein Bereich 15 gekennzeichnet, der durch Ansteuerung der Verbrennungskraftmaschine, beispielsweise bei nicht selbstzündenden Verbrennungskraftmaschinen durch eine Drosselklappenstellung oder eine Zündwinkelvorgabe und bei selbstzündenden Verbrennungskraftmaschinen durch eine Kraftstoffeinspritzmenge, nicht eingestellt werden kann. Es wird deutlich, dass ein Betriebspunkt der Verbrennungskraftmaschine durch die Motordrehzahl n und das Moment M festgelegt ist, wobei die obere Grenze durch die maximale Moment-Kennlinie 10 und die untere Grenze durch die Schleppmoment-Kennlinie 12 begrenzt ist.

In Figur 2 ist ein Abtriebsmoment M_{A} über der Zeit t dargestellt. Hier ist angenommen, dass zu einem Zeitpunkt t₁ ein mit der Verbrennungskraftmaschine wirkverbundenes Getriebe schaltet, beispielsweise durch Handschaltung oder Automatikschaltung, so dass es zu einer sprungartigen Änderung des Abtriebsmomentes M_{A} bei einer negativen Moment-Anforderung an die Verbrennungskraftmaschine durch einen Fahrzeugführer kommt. Diese sprunghafte Veränderung des Abtriebsmomentes M_{A} wirkt auf die Antriebsräder des Fahrzeuges und führt zur Beeinträchtigung eines Fahrkomforts.

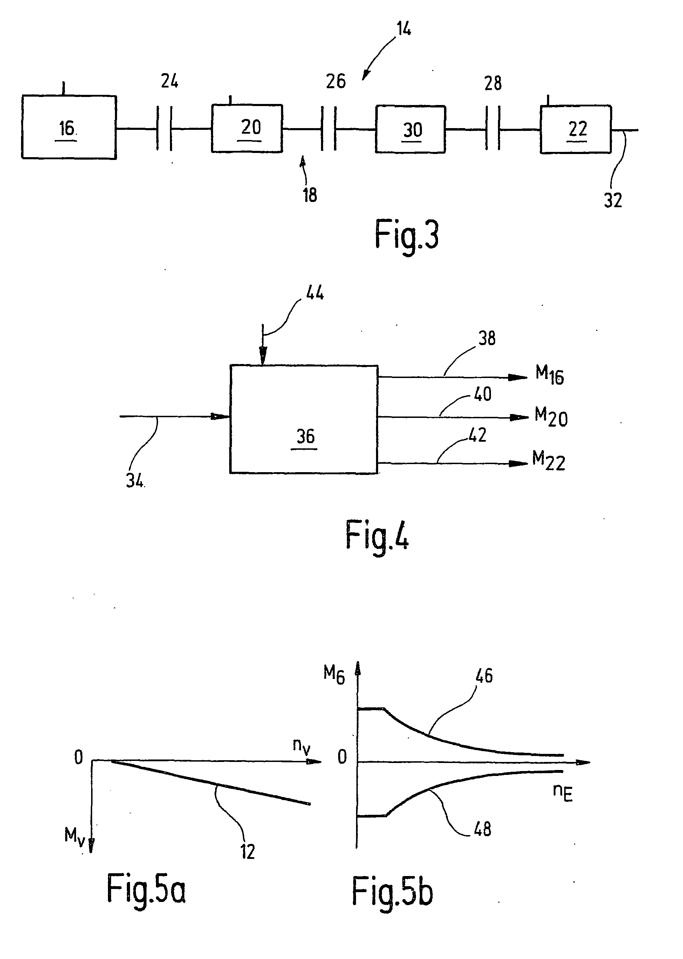

In Figur 3 ist schematisch ein Hybridantrieb 14 eines Fahrzeuges dargestellt, der eine die in Figuren 1 und 2 dargestellten Kennlinien aufweisende Verbrennungskraftmaschine 16 umfasst. Bei der Darstellung in Figur 3 handelt es sich um einen parallelen Hybridantrieb, bei dem ein Antriebsstrang 18 neben der Verbrennungskraftmaschine 16 wenigstens eine, hier zwei elektrische Maschinen 20 beziehungsweise 22 umfasst. Der Antriebsstrang 18 umfasst Kupplungen 24, 26 und 28 sowie ein Getriebe 30. Durch Betätigen der Kupplungen 24, 26 und/oder 28 und Ansteuern der Verbrennungskraftmaschine 16 beziehungsweise der elektrischen Maschinen 20 und/oder 22 kann an einer Abtriebswelle 32 des Antriebsstranges 18 ein wählbares Antriebsmoment eingestellt werden. Aufbau und Wirkungsweise derartiger paralleler Hybridantriebe 14 sind allgemein bekannt, so dass im Rahmen der vorliegenden Beschreibung hierauf nicht näher eingegangen werden soll.

Figur 4 zeigt in einem Blockschaltbild nunmehr die Möglichkeit der Beeinflussung des Schleppmomentes der in Figur 3 gezeigten Anordnung. Hierbei wird davon ausgegangen, dass durch einen Fahrzeugführer eine negative Moment-Anforderung vorliegt, das heißt, das Fahrpedal befindet sich in der Stellung 0 beziehungsweise annähernd in der Stellung 0. Diese negative Moment-Anforderung 34 wird einem Schleppmoment-Koordinator 36 zugeführt. Der Schleppmoment-Koordinator. 36 kann von einer im Detail nicht dargestellten Schaltungsanordnung gebildet sein, die beispielsweise Bestandteil eines Steuergerätes (Motorsteuergerätes) des Hybridantriebes 14 ist. Der Schleppmoment-Koordinator 36 gibt Steuersignale 38, 40 und 42 aus. Mittels der Steuersignale 38, 40 und 42 erfolgt eine Ansteuerung der Verbrennungskraftmaschine 16 beziehungsweise der elektrischen Maschinen 20 und 22 derart, dass von diesen ein definiertes Moment M₁₆, M₂₀ beziehungsweise M₂₂ angefordert wird, mit dem diese auf den Antriebsstrang 18 wirken. Im gezeigten Beispiel ist von zwei elektrischen Maschinen 20 und 22 ausgegangen, wobei klar ist, dass die Anzahl der elektrischen Maschinen auch größer oder kleiner sein kann, so dass eine entsprechende Anzahl von Steuersignalen für die elektrischen Maschinen 20 und 22 von dem Schleppmoment-Koordinator 36 bereitgestellt wird. Dem Schleppmoment-Koordinator 36 wird ferner ein Steuersignal 44 zugeführt, das der momentanen Getriebeübersetzung des Getriebes 30, also dessen Gangstellung, entspricht.

In der Figur 5a ist nochmals die Schleppmoment-Kennlinie 12 der Verbrennungskraftmaschine 16 dargestellt, wobei deren Drehzahlabhängigkeit von der Drehzahl n deutlich, wird. Figur 5b zeigt die maximal und minimal mögliche Moment-Kennlinie 46 beziehungsweise 48 einer elektrischen Maschine über der Drehzahl n_{E} der elektrischen Maschine. Die Drehzahl n_{E} der elektrischen Maschine ist beispielsweise abhängig von der Höhe einer Versorgungsspannung, so dass mittels der Signale 40 und 42 (Figur 4) ohne weiteres die Drehzahl n_{E} der elektrischen Maschinen 20 und 22 und somit deren Moment M_{E} gesteuert werden kann.

Anhand der Figuren 5a und 5b wird deutlich, dass durch Überlagerung der Moment-Kennlinie der Verbrennungskraftmaschinen 16 und der Moment-Kennlinien der elektrischen Maschinen 20 beziehungsweise 22 eine resultierende Schleppmoment-Kennlinie des Hybridantriebes 14 eingestellt werden kann. Bei geschlossenen Kupplungen 24, 26 und 28 ist somit die Summe der sich überlagernden Momente M_{V} beziehungsweise M_{E} das maximal er-reichbare Schleppmoment des Hybridantriebes 14. Durch die Abhängigkeit der Momente von der Drehzahl n_{V} beziehungsweise n_{E} ergibt sich eine Abhängigkeit von der momentanen Fahrzeuggeschwindigkeit v.

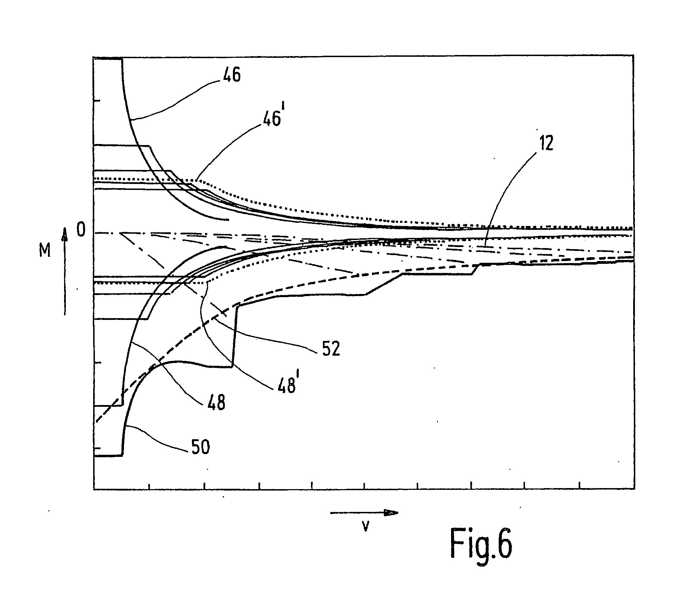

Figur 6 verdeutlicht nunmehr eine Überlagerung der Schleppmoment-Kennlinie 12 der Verbrennungskraftmaschine 16 mit den maximalen beziehungsweise minimalen Moment-Kennlinien 46, 46' und 48, 48' der elektrischen Maschinen 20 beziehungsweise 22. Hierbei sind jeweils die Momente über der Fahrzeuggeschwindigkeit v aufgetragen. Die Schleppmoment-Kennlinie 12 ist als Kennlinienschar (Strich-Punkt-Strich-Linien) eingetragen, wobei sich die unterschiedlichen Verläufe der Schleppmoment-Kennlinie 12 vom aktuellen Schaltzustand des Getriebes 30 ergeben. In Figur 6 sind fünf Kennlinien der Schleppmoment-Kennlinie 12 eingetragen, wobei hier dann von einem 5-Gang-Schaltgetriebe 30 ausgegangen ist. Mit 46 beziehungsweise 46' sind die maximalen Moment-Kennlinien der elektrischen Maschinen 20 beziehungsweise 22 und mit 48 beziehungsweise 48' die minimalen Moment-Kennlinien der elektrischen Maschinen 20 und 22 eingetragen.

Entsprechend der Betätigung der Kupplungen 24, 26 und 28 können unterschiedliche Einflussmöglichkeiten der Verbrennungskraftmaschine 16 beziehungsweise elektrischen Maschinen 20 und 22 auf das Gesamt-Schleppmoment des Hybridantriebes 14 gewählt werden. Hierbei ergeben sich beispielsweise folgende Möglichkeiten:
1. Die Kupplung 28 ist geöffnet, so dass das Schleppmoment ausschließlich durch die elektrische Maschine 22 bestimmt wird.
2. Die Kupplungen 28 und 26 sind geschlossen und die Kupplung 24 ist offen, so dass das Schleppmoment des Hybridantriebes 14 durch die elektrischen Maschinen 20 und 22 bestimmt wird.
3. Die Kupplungen 24, 26 und 28 sind jeweils geschlossen, so dass das Schleppmoment des Hybridantriebes durch die elektrischen Maschinen 20 und 22 sowie die Verbrennungskraftmaschine 16 bestimmt wird.

Es wird deutlich, dass in Abhängigkeit der Ansteuerungen der Kupplungen 24, 26 und 28 sowie der elektrischen Maschinen 20 und 22 unterschiedliche Überlagerungen der Schleppmoment-Kennlinie 12 der Verbrennungskraftmaschine 16 möglich sind. Durch Öffnen der Kupplung 24 tritt ein so genannter Segelbetrieb des Hybridantriebes 14 ein, wobei hier das Schleppmoment trotzdem durch die elektrischen Maschinen 20 und 22 beeinflusst werden kann.

In Figur 6 ist mit 50 die maximal mögliche Schleppmoment-Kennlinie des Hybridantriebes 14 dargestellt. Diese ergibt sich durch Überlagerung der Schleppmoment-Kennlinie 12 der Verbrennungskraftmaschine und der minimalen Moment-Kennlinien 48 und 48' der elektrischen Maschinen 20 und 22. Wie Figur 6 verdeutlicht, beinhaltet diese maximal mögliche Schleppmoment-Kennlinie 50 über der Fahrzeuggeschwindigkeit v Unstetigkeiten. Daher wird durch den Schleppmoment-Koordinator 36 eine Schleppmoment-Kennlinie 52 gewählt, die der maximal möglichen Schleppmoment-Kennlinie 50 unter Berücksichtigung eines stetigen Verlaufes maximal angeglichen ist. Diese gewählte Schleppmoment-Kennlinie 52 wird dadurch erhalten, dass im Schleppmoment-Koordinator 36 für jede Fahrzeuggeschwindigkeit v in Abhängigkeit der Getriebestellung des Getriebes 30 (Signal 44) Ansteuersignale 38, 40 und 42 für die Verbrennungskraftmaschine 16 beziehungsweise elektrischen Maschinen 20 und 22 abgelegt sind. Hierdurch können beispielsweise die elektrischen Maschinen 20 und 22 im motorischen oder generatorischen Betrieb innerhalb ihrer maximalen beziehungsweise minimalen Kennlinien 46, 48 betrieben werden, so dass durch die sich ergebende Überlagerung der Kennlinien die gewählte Schleppmoment-Kennlinie 52 des Hybridantriebes 14 eingestellt werden kann.

Selbstverständlich sind durch Abarbeitung entsprechender Routinen auch andere Schleppmoment-Kennlinien 52 wählbar. Gegebenenfalls ist der Schleppmoment-Koordinator 36 mit einer Kennfeldsteuerung ausgestattet, die gestattet, in Abhängigkeit weiterer Betriebsparameter des Fahrzeuges für gleiche Fahrzeuggeschwindigkeiten v unterschiedliche Schleppmomente einzustellen.

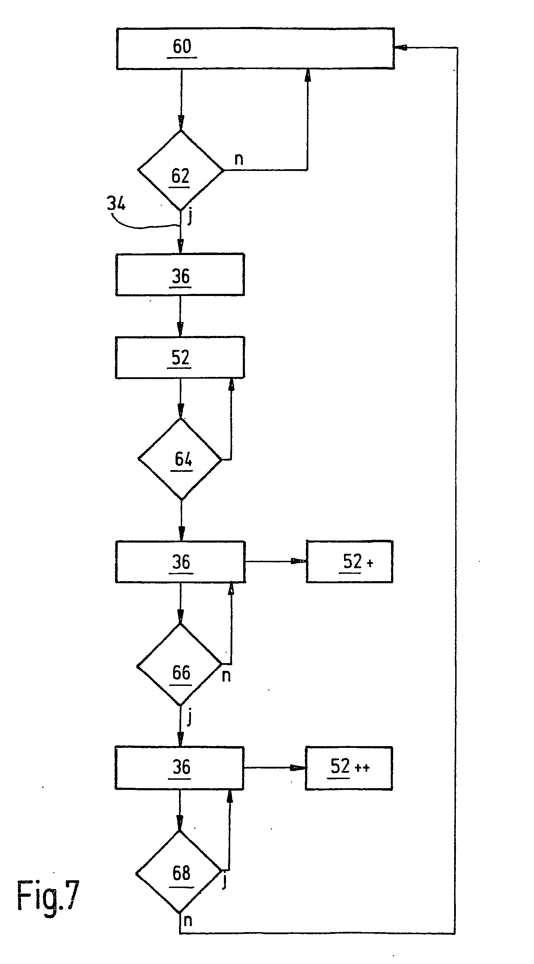

Hierzu ist beispielsweise in Figur 7 ein Flussdiagramm zur Variation der Schleppmoment-Kennlinie 52 in Abhängigkeit einer Bremsbetätigung des Fahrzeuges dargestellt. Zunächst besteht keine negative Moment-Anforderung (kein Schleppmoment des Fahrzeugführers) gemäß Feld 60. Über eine Abfrage 62 wird ständig geprüft, ob eine Schleppmoment-Anforderung besteht. Dies kann beispielsweise durch Überprüfen der Stellung eines Fahrpedals erfolgen. Ist die Stellung des Fahrpedals unterhalb eines vorgebbaren Grenzwertes, wird der Schleppmoment-Koordinator 36 durch das Signal 34 (negative Moment-Anforderung) aktiviert.

Ist die Fahrpedalstellung nicht unterhalb des vorgebbaren Grenzwertes, verbleibt die Anforderung "kein Schleppmoment" (Feld 60).

Der Schleppmoment-Koordinator 36 generiert die Signale 38, 40 und 42, so dass sich die Schleppmoment-Kennlinie 52 einstellt. Diese Schleppmoment-Kennlinie 52 ist, wie Figur 6 verdeutlicht, geschwindigkeitsabhängig festgelegt.

Erfolgt während der Schleppmoment-Anforderung durch den Fahrzeugführer eine Betätigung der Bremseinrichtung des Fahrzeuges, so dass beispielsweise durch Anliegen eines Signales an einem Bremslichtschalter detektiert werden kann, liefert eine Abfrage 64 bei betätigter Bremseinrichtung ein Signal an den Schleppmoment-Koordinator 36, der daraufhin das Schleppmoment einmalig erhöht (Feld 52+). Erfolgt eine erneute Bremsbetätigung durch den Fahrzeugführer (Abfrage 66), wird ein erneutes Steuersignal an den Schleppmoment-Koordinator 36 generiert, der daraufhin das Schleppmoment weiter, entweder in weiteren Stufe oder bis zum maximalen Schleppmoment (Feld 52++), erhöht. Über eine Abfrage 68 wird ständig überprüft, ob im Weiteren eine positive Moment-Anforderung des Fahrzeugführers, beispielsweise durch Betätigung des Fahrpedals, erfolgt. Erfolgt diese positive Moment-Anforderung, wird die Schleppmoment-Kennlihiensteuerung in Feld 60 überführt, so dass über eine Übergangsfunktion das Schleppmoment abgebaut wird und der Hybridantrieb 14 entsprechend der positiven Moment-Anforderung gesteuert wird.

Anhand der Erläuterungen wird deutlich, dass durch den Schleppmoment-Koordinator 36 unterschiedlichste Schleppmoment-Kennlinien des Hybridantriebes 14 eingestellt werden können. Dies kann in Abhängigkeit einer Fahrzeuggeschwindigkeit v und/oder in Abhängigkeit einer Bremsbetätigung des Fahrzeuges erfolgen. Hierbei kann - wie erläutert - zwei- oder mehrstufig vorgegangen werden. Als zusätzliche Führungsgröße könnte hierbei beispielsweise eine Dynamik des Fahrpedals berücksichtigt werden. Die Dynamik des Fahrpedals lässt sich beispielsweise aus einem Gradienten eines Fahrpedalsignals ableiten. Weitere Einflussgröße kann beispielsweise eine gegebene Fahrbahnneigung, beispielsweise bei einer Talfahrt oder dergleichen, sein. Hier ist eine Einstellung des Schleppmomentes derart möglich, dass eine konstante Geschwindigkeit v des Fahrzeuges beibehalten wird.

Alles in allem wird deutlich, dass durch die Beeinflussung der Schleppmoment-Kennlinie über den Schleppmoment-Koordinator 36 eine Vorgabe von Betriebspunkten des Hybridantriebes 14 mit negativem Moment im Rahmen der physikalischen Möglichkeiten des Hybridantriebes 14 möglich ist. Insbesondere sind drehzahlunabhängige Schleppmoment-Kennlinien einstellbar. Ferner wird das Auftreten von Moment-Sprüngen beim Rückschalten des Getriebes 30 durch die Regelung auf geschwindigkeitsabhängige Schleppmoment-Verläufe verhindert. Darüber hinaus lässt sich das Schleppmoment-Verhalten des Hybridantriebes 14 beim Wechseln der Betriebsart, beispielsweise verbrennungsmotorischer Betrieb, elektromotorischer Betrieb oder kombinierter verbrennungsmotorischer und elektromotorischer Betrieb, berücksichtigen. Schließlich sind so genannte Segelbetriebe auch bei eingekuppelter Verbrennungskraftmaschine 16 in den Antriebsstrang 18 möglich, indem das Schleppmoment der Verbrennungskraftmaschine 16 durch die elektrischen Maschinen 20 und/oder 22 kompensiert wird.

Die Erläuterung des Ausführungsbeispieles bezog sich auf einen parallelen Hybridantrieb 14. Selbstverständlich lässt sich die Steuerung des Betriebsverhaltens des Hybridantriebes durch Beeinflussung einer Schleppmoment-Kennlinie auch bei seriellen Hybridantrieben und gemischten (parallelen und seriellen) Hybridantrieben realisieren.

## Patentansprüche

1. Verfahren zur Steuerung des Betriebsverhaltens eines eine Verbrennungskraftmaschine (16) und wenigstens eine elektrische Maschine (20,22) als Antriebsmaschinen und ein Getriebe aufweisenden Hybridantriebes (14) eines Fahrzeuges, bei dem die Abtriebswellen der Antriebsmaschinen mit einem Antriebsstrang (18) des Fahrzeuges wirkverbindbar sind, **dadurch gekennzeichnet, dass** zur Ansteuerung der Antriebsmaschinen aus einer negativen Momentanforderung und einer Getriebestellung des Getriebes (30) Ansteuersignales (38,40,42) bereitgestellt werden, die von den Antriebsmaschinen definierte Momente zur Übertragung auf den Antriebsstrang (18) anfordern, wobei durch die Ansteuerung der Antriebmaschinen eine fahrzeuggeschwindigkeitsabhängige Schleppmoment-Kennlinie (12) zur Verhinderung von Momentsprüngen bei einem Rückschalten des Getriebes eingestellt wird, bei der die Größe des Schleppmomentes von der Drehzahl der Verbrennungskraftmaschine unabhängig ist.

2. Verfahren nach Anspruch 1, **dadurch gekennzeichnet, dass** durch Trennen der Verbrennungskraftmaschine (16) aus dem Antriebsstrang (18) Schleppmomente alleine durch die wenigstens eine elektrische Maschine (20, 22) aufgebracht werden.

3. Verfahren nach einem der vorhergehenden Ansprüche, **dadurch gekennzeichnet, dass** ein so genannter Segelbetrieb des Hybridantriebes, (14) auch ohne Entkuppeln der Verbrennungskraftmaschine (16) aus dem Antriebsstrang (18) erfolgt.

4. Verfahren nach einem der vorhergehenden Ansprüche, **dadurch gekennzeichnet, dass** die Schleppmoment-Kennlinie (52) einer maximal möglichen Schleppmoment-Kennlinie (50) unter Berücksichtigung eines stetigen Verlaufes maximal angeglichen wird.

5. Verfahren nach einem der vorhergehenden Ansprüche, **dadurch gekennzeichnet, dass** die Schleppmoment-Kennlinie (52) durch einen Schleppmoment-Koordinator (36) bestimmt wird, der aus einer negativen Moment-Anforderung (34) sowie einer Getriebestellung (Signal 44) Ansteuersignale (38, 40, 42) für die Antriebsmaschinen (16, 20, 22) bereitstellt.

6. Verfahren nach Anspruch 5, **dadurch gekennzeichnet, dass** die Ansteuersignale (38, 40, 42) in Abhängigkeit einer Momentangeschwindigkeit (v) des Fahrzeuges bereitgestellt werden.

7. Verfahren nach einem der vorhergehenden Ansprüche, **dadurch gekennzeichnet, dass** zur Beeinflussung der Schleppmoment-Kennlinie (52) die elektrischen Maschinen (20, 22) im generatorischen und/oder motorischen Modus betrieben werden.

8. Verfahren nach einem der vorhergehenden Ansprüche, **dadurch gekennzeichnet, dass** die Schleppmoment-Anforderung durch Überprüfen der Stellung des Fahrpedals des Fahrzeuges abgegriffen wird.

9. Verfahren nach einem der vorhergehenden Ansprüche, **dadurch gekennzeichnet, dass** die Beeinflussung der Schleppmoment-Kennlinie (52) in Abhängigkeit weiterer Betriebsparameter des Fahrzeuges erfolgt.

10. Verfahren nach Anspruch 9, **dadurch gekennzeichnet, dass** durch gezielte Ansteuerung der wenigstens einen elektrischen Maschine (20, 22) die Schleppmoment-Kennlinie (52) in Abhängigkeit einer Bremsanforderung eines Fahrzeugführers variiert wird.

11. Verfahren nach Anspruch 10, **dadurch gekennzeichnet, dass** das Schleppmoment stufenweise erhöht wird.

## Claims

1. Method for controlling the operating behaviour of a hybrid drive (14), having an internal combustion engine (16) and at least one electric machine (20, 22) as drive machines and a transmission, of a vehicle, in which method the output shafts of the drive machines are operatively connected to a drive train (18) of the vehicle, **characterized in that**, in order to actuate the drive machines from a negative torque request and a gearbox position of the gearbox (30), actuation signals (38, 40, 42) are made available which request torques which are defined by the drive machines for transmission to the drive train (18), wherein the vehicle-velocity-dependent drag torque characteristic curve (12) for preventing torque jumps when the gearbox is shifted down is set as a result of the actuation of the drive machines, in which drag torque characteristic curve (12) the magnitude of the drag torque is independent of the rotational speed of the internal combustion engine.

2. Method according to Claim 1, **characterized in that**, as a result of disconnection of the internal combustion engine (16) from the drive train (18), drag torques are applied solely by the at least one electric machine (20, 22).

3. Method according to one of the preceding claims, **characterized in that** what is referred to as a sailing mode of the hybrid drive (14) is carried out even without uncoupling the internal combustion engine (16) from the drive train (18).

4. Method according to one of the preceding claims, **characterized in that** the drag torque characteristic curve (52) is approximated at maximum to a maximum possible drag torque characteristic curve (50) taking into account a continuous profile.

5. Method according to one of the preceding claims, **characterized in that** the drag torque characteristic curve (52) is determined by a drag torque coordinator (36) which makes available actuation signals (38, 40, 42) for the drive machines (16, 20, 22) from a negative torque request (34) and a gearbox position (signal 44).

6. Method according to Claim 5, **characterized in that** the actuation signals (38, 40, 42) are made available as a function of an instantaneous velocity (v) of the vehicle.

7. Method according to one of the preceding claims, **characterized in that**, in order to influence the drag torque characteristic curve (52), the electric machines (20, 22) are operated in the generator and/or motor mode.

8. Method according to one of the preceding claims, **characterized in that** the drag torque request is tapped by checking the position of the accelerator pedal of the vehicle.

9. Method according to one of the preceding claims, **characterized in that** the drag torque characteristic curve (52) is influenced as a function of further operating parameters of the vehicle.

10. Method according to Claim 9, **characterized in that** the drag torque characteristic curve (52) is varied as a function of a brake request of a vehicle driver by selective actuation of the at least one electric machine (20, 22).

11. Method according to Claim 10, **characterized in that** the drag torque is increased incrementally.

## Revendications

1. Procédé de commande des caractéristiques de fonctionnement d'un système d'entraînement hybride (14) ayant comme moteurs, un moteur à combustion interne (16) et au moins une machine électrique (30, 22) ainsi qu'une transmission pour un véhicule selon lequel les arbres d'entraînement des moteurs coopèrent avec la ligne d'entraînement (18) du véhicule,
**caractérisé en ce que**
pour la commande des moteurs, à partir d'une demande de couple négatif et d'une position de la transmission (30), on fournit des signaux de commande (38, 40, 42) demandant des couples définis au moteur pour être transmis à la ligne d'entraînement (18),
la commande des moteurs réglant une caractéristique de couple de traînée (12) dépendant de la vitesse du véhicule pour éviter les variations brusque de couple lorsqu'on rétrograde la transmission, et l'amplitude du couple est indépendante de la vitesse de rotation du moteur à combustion interne.

2. Procédé selon la revendication 1,
**caractérisé en ce qu'**
en coupant le moteur à combustion interne (16) de la ligne d'entraînement (18), on applique uniquement des couples de traînée par au moins une machine électrique (20, 22).

3. Procédé selon l'une des revendications précédentes,
**caractérisé en ce que**
le fonctionnement de traînée du système d'entraînement hybride (14) se fait également sans débrayer le moteur à combustion interne (16) par rapport à la ligne d'entraînement (18).

4. Procédé selon l'une des revendications précédentes,
**caractérisé en ce qu'**
on adapte la courbe caractéristique de couple de traînée (52) à une courbe caractéristique de couple de traînée maximale possible (50) en tenant compte d'une évolution continue, maximale.

5. Procédé selon l'une des revendications précédentes,
**caractérisé en ce qu'**
on définit la courbe caractéristique de couple de traînée (52) par un coordinateur de couple de traînée (36) qui fournit des signaux de commande (38, 40, 42) pour les machines d'entraînement (16, 20, 22) à partir d'une demande de couple négatif (34) et d'une position de transmission (signal 44).

6. Procédé selon la revendication 5,
**caractérisé en ce qu'**
on fournit les signaux de commande (38, 40, 42) en fonction de la vitesse instantanée (v) du véhicule.

7. Procédé selon l'une des revendications précédentes,
**caractérisé en ce que**
pour influencer la courbe caractéristique de couple de traînée (52) on fait fonctionner les machines électriques (20, 22) en mode générateur et/ou moteur.

8. Procédé selon l'une des revendications précédentes,
**caractérisé en ce qu'**
on prend la demande de couple de traînée en vérifiant la position de la pédale d'accélérateur du véhicule.

9. Procédé selon l'une des revendications précédentes,
**caractérisé en ce qu'**
on influence la courbe caractéristique de couple de traînée (52) selon d'autres paramètres de fonctionnement du véhicule.

10. Procédé selon la revendication 9,
**caractérisé en ce que**
par une commande ciblée d'au moins une machine électrique (20, 22) on varie la courbe caractéristique de couple de traînée (52) selon une demande de freinage du conducteur du véhicule.

11. Procédé selon la revendication 10,
**caractérisé en ce qu'**
on augmente par paliers le couple de traînée.
